# EUROPEAN PATENT APPLICATION

(11) **EP 4 693 979 A1**
(43) Date of publication of application: **11.02.2026**
(21) Application number: 23931414.9
(22) Date of filing: 06.04.2023
(51) Int. Cl.: H04L 1/1812

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 100085 (CN)
(74) Representative: Gunzelmann, Rainer
(86) International application number: PCT/CN2023/086689
(87) International publication number: WO 2024/207345

(57) **Abstract**

The present invention relates to a communication method and apparatus, and a storage medium. The communication method comprises: in response to a first terminal executing multi-consecutive slots transmission of the same transport block (TB), selecting a physical sidelink shared channel (PSSCH) resource for the ith multi-consecutive slots transmission of the TB, i being a positive integer greater than or equal to **1,** the PSSCH resource for the ith multi-consecutive slots transmission comprising PSSCH resources of M consecutive slots, and M being a positive integer greater than 1; and sending the same TB to a second terminal on the PSSCH resources of the M consecutive slots. The present invention defines the communication method for supporting HARQ feedback retransmission and blind retransmission in scenarios of terminals executing multi-consecutive slots transmission of the same TB.

## Description

### TECHNICAL FIELD

The invention relates to the field of communication technologies, and in particular to a method and an apparatus for communication, and a storage medium.

### BACKGROUND

Multi-consecutive slots transmission (MCST) is supported in a sidelink (SL) unlicensed frequency band. The MCST may be understood as transmission of a transport block (TB) in multi-consecutive slots, and may also be referred to as multi-consecutive TB transmission. The multi-consecutive TBs may be repeated consecutive transmissions of the same TB.

In the related art, for a design of the SL licensed frequency band, if a resource pool is configured with a physical sidelink feedback channel (PSFCH) resource, feedback retransmission based on a hybrid automatic repeat request (HARQ) is supported for the TB. However, in the MCST technology, the repeated consecutive transmission of the same TB do not support the feedback retransmission based on the HARQ.

### SUMMARY

To overcome problems in the related art, the invention provides a method and an apparatus for communication, and a storage medium.

According to a first aspect of embodiments of the invention, a method for communication is provided. The method is performed by a first terminal, including: in response to the first terminal performing multi-consecutive slots transmission (MCST) of a same transport block (TB), selecting, for the TB, a physical sidelink shared channel (PSSCH) resource for i-th MCST, where i is a positive integer greater than or equal to 1; the PSSCH resource for the i-th MCST includes a PSSCH resource in M consecutive slots, and M is a positive integer greater than 1; and sending the same TB to a second terminal on the PSSCH resource in the M consecutive slots.

In an implementation, feedback retransmission based on a hybrid automatic repeat request (HARQ) is supported for a TB transmitted on a PSSCH resource for the i-th MCST in a last slot among the M consecutive slots.

In an implementation, the method further includes: selecting, for the TB, a PSSCH resource for the (i+1)-th MCST, in which the PSSCH resource for the (i+1)-th MCST includes the PSSCH resource in the M consecutive slots; in which a slot interval between a first PSSCH resource and a second PSSCH resource satisfies a minimum time interval of the feedback retransmission based on the HARQ; the first PSSCH resource is the PSSCH resource for the i-th MCST in the last slot among the M consecutive slots; and the second PSSCH resource is a PSSCH resource for the (i+1)-th MCST in a first slot among the M consecutive slots.

In an implementation, blind retransmission is supported for a TB transmitted on a PSSCH resource in a non-last slot among the M consecutive slots.

In an implementation, supporting the feedback retransmission based on the HARQ includes: an HARQ indicator included in second-stage sidelink control information (SCI) being in an enabled state.

In an implementation, supporting the blind retransmission includes: an HARQ indicator included in second-stage SCI being in a disabled state.

According to a second aspect of embodiments of the invention, a method for communication is provided. The method is performed by a second terminal, including: receiving a same TB sent by a first terminal on a PSSCH resource in M consecutive slots; in which feedback retransmission based on a HARQ is supported for a TB transmitted on a PSSCH resource in a last slot among the M consecutive slots; blind retransmission is supported for a TB transmitted on a PSSCH resource in a non-last slot among the M consecutive slots; and feeding back HARQ information corresponding to the TB on a PSFCH occasion, in which the PSFCH occasion is mapped to the PSSCH resource in the last slot among the M consecutive slots.

According to a third aspect of embodiments of the disclosure, a communication apparatus is provided. The apparatus includes: a processing unit, configured to, in response to the first terminal performing MCST of a same TB, select, for the TB, a PSSCH resource for i-th MCST, where i is a positive integer greater than or equal to 1; the PSSCH resource for the i-th MCST includes a PSSCH resource in M consecutive slots, and M is a positive integer greater than 1; and a sending unit, configured to send the same TB to a second terminal on the PSSCH resource in the M consecutive slots.

In an implementation, feedback retransmission based on a HARQ is supported for a TB transmitted on a PSSCH resource for the i-th MCST in a last slot among the M consecutive slots.

In an implementation, the processing unit is further configured to: select, for the TB, a PSSCH resource for the (i+1)-th MCST, in which the PSSCH resource for the (i+1)-th MCST includes the PSSCH resource in the M consecutive slots; in which a slot interval between a first PSSCH resource and a second PSSCH resource satisfies a minimum time interval of the feedback retransmission based on the HARQ; the first PSSCH resource is the PSSCH resource for the i-th MCST in the last slot among the M consecutive slots; and the second PSSCH resource is a PSSCH resource for the (i+1)-th MCST in a first slot among the M consecutive slots.

In an implementation, blind retransmission is supported for a TB transmitted on a PSSCH resource in a non-last slot among the M consecutive slots.

In an implementation, supporting the feedback retransmission based on the HARQ includes: an HARQ indicator included in second-stage SCI being in an enabled state.

In an implementation, supporting the blind retransmission includes: an HARQ indicator included in second-stage SCI being in a disabled state.

According to a fourth aspect of embodiments of the disclosure, a communication apparatus is provided. The apparatus includes: a receiving unit, configured to receive a same TB sent by a first terminal on a PSSCH resource in M consecutive slots; in which feedback retransmission based on a HARQ is supported for a TB transmitted on a PSSCH resource in a last slot among the M consecutive slots; blind retransmission is supported for a TB transmitted on a PSSCH resource in a non-last slot among the M consecutive slots; and a feeding back unit, configured to feed back HARQ information corresponding to the TB on a PSFCH occasion, in which the PSFCH occasion is mapped to the PSSCH resource in the last slot among the M consecutive slots.

According to a fifth aspect of embodiments of the invention, a communication device is provided. The device includes: one or more processors, in which the processors are configured to invoke instructions to cause the communication device to perform the method according to the first aspect or any implementation of the first aspect.

According to a sixth aspect of embodiments of the invention, a communication device is provided. The device includes: one or more processors, in which the processors are configured to invoke instructions to cause the communication device to perform the method according to the second aspect or any implementation of the second aspect.

According to a seventh aspect of embodiments of the disclosure, a storage medium storing instructions is provided. When the instructions are executed by a communication device, the communication device is caused to perform the method according to the first aspect or any implementation of the first aspect.

According to an eighth aspect of embodiments of the invention, a storage medium storing instructions is provided. When the instructions are executed by a communication device, the communication device is caused to perform the method according to the second aspect or any implementation of the second aspect.

The technical solutions provided in the embodiments of the invention may include the following beneficial effects: the method for communication based on the HARQ feedback retransmission is clarified for a scenario where the terminal performs the MCST of the same TB.

It should be understood that the above general description and the following detailed description are only exemplary and explanatory, and do not limit the disclosure.

### BRIEF DESCRIPTION OF THE DRAWINGS

The figures here are incorporated into the specification and constitute a part of the specification, showing that they conform to the embodiments of the invention, and are used together with the specification to explain the principles of the invention.
FIG. 1a is a schematic diagram illustrating a wireless communication system according to an exemplary embodiment.
FIG. 1b is a timing diagram illustrating feedback retransmission based on a hybrid automatic repeat request (HARQ) for a TB according to an exemplary embodiment.
FIG. 2 is a flow chart illustrating a method for interaction communication between terminals according to an exemplary embodiment.
FIG. 3 is a flow chart illustrating a method for communication according to an exemplary embodiment.
FIG. 4 is a flow chart illustrating a method for communication according to an exemplary embodiment.
FIG. 5 is a timing diagram illustrating a method for communication according to an exemplary embodiment.
FIG. 6 is a block diagram illustrating an apparatus for communication according to an exemplary embodiment.
FIG. 7 is a block diagram illustrating an apparatus for communication according to an exemplary embodiment.
FIG. 8 is a block diagram illustrating a communication device according to an exemplary embodiment.
FIG. 9 is a block diagram illustrating a communication device according to an exemplary embodiment.

### DETAILED DESCRIPTION

Reference will now be made in detail to the exemplary embodiments, examples of which are illustrated in the accompanying figures. When the following description refers to the accompanying figures, the same numerals in different figures represent the same or similar elements unless otherwise indicated. The implementations described in the following exemplary embodiments do not represent all implementations consistent with the invention.

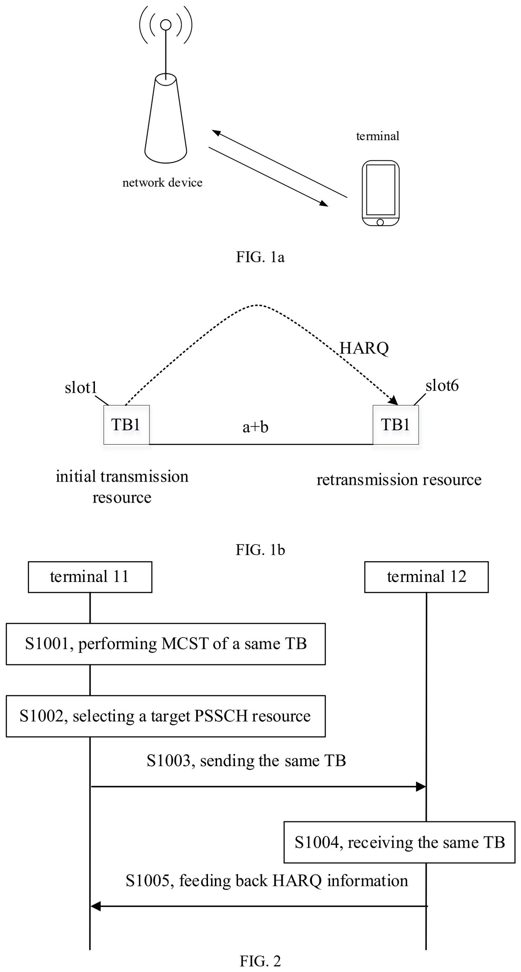

The method for communication according to embodiments of the invention may be applied to a wireless communication system illustrated in FIG. 1a. As shown in FIG. 1a, the wireless communication system includes a network device and a terminal. The terminal connects to the network device via wireless resources and performs data transmission.

It may be understood that the wireless communication system in FIG. 1a is only for schematic illustration, and the wireless communication system may also include other network devices, such as a core network device, a wireless relay device, and a wireless backhaul device, which are not illustrated in FIG. 1a. The number of network devices and the number of terminals in the wireless communication system are not limited in embodiments of the invention.

It may be further understood that the wireless communication system according to embodiments of the invention is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), or carrier sense multiple access with collision avoidance. The networks, according to capacities, speeds, delays, and other factors of different networks, may be divided into a second generation (2G) network, a third generation (3G) network, a fourth generation (4G) network, or a future evolution network, such as a fifth generation wireless communication system (5G) network, which may also be called a new radio (NR) network. For convenience of descriptions, the wireless communication network may be referred simply as a network sometimes in the invention.

Further, the network device involved in the invention may also be referred to as a radio access network (RAN) device. The RAN device may be a base station, an evolved node B (eNB), a home base station, an access point (AP) in a wireless fidelity (WiFi) system, a wireless relay node, a wireless backhaul node, a transmission point (TP), a transmission and reception point (TRP), or the like; may also be a next generation base station (gNB) in an NR system; or may also be a component or a part of device that constitutes a base station. It should be understood that the specific technology and specific device form adopted by the network device are not limited in embodiments of the invention. In the invention, the network device may provide communication coverage for a specific geographical area and may communicate with terminals located within the coverage area (cell). Further, when applied to a vehicle-to-everything (V2X) communication system, the network device may also be a vehicle-mounted device.

Further, the terminal according to the invention may also be referred to as a terminal device, a user equipment (UE), a mobile station (MS), a mobile terminal (MT), or the like. The terminal is a device providing voice and/or data connectivity for a user. For example, the terminal may be a handheld device or a vehicle-mounted device with a wireless connection function, or the like. Currently, some examples of the terminal are mobile phones, pocket personal computers (PPCs), palmtop computers, personal digital assistants (PDAs), laptops, tablets, wearable devices, vehicle-mounted devices, or the like. In addition, when applied to a V2X communication system, the terminal may also be a vehicle-mounted device. It should be understood that the specific technology and specific device form adopted by the terminal are not limited in embodiments of the invention.

In an existing design for a sidelink (SL) licensed frequency band as defined in Release 16 of the 3rd generation partnership project (3GPP) standards, feedback retransmission based on a hybrid automatic repeat request (HARQ) for a transport block (TB) has been specified. In detail, if a resource pool is configured with a physical sidelink feedback channel (PSFCH) resource and the feedback retransmission based on the HARQ is used for the TB, there is a need to ensure that any two resources selected for the TB (e.g., between an initial transmission resource and a retransmission resource, or between retransmission resources) satisfy a minimum time interval a+b, in which a refers to a time interval between an end position of a last symbol of a resource selected for the TB for physical sidelink shared channel (PSSCH) transmission and a start position of a first symbol of PSFCH reception corresponding to the PSSCH, the position of PSFCH reception is determined based on relevant information of the resource pool; b refers to time required for PSFCH reception and processing and SL retransmission preparation, including necessary physical channel multiplexing time and TX-RX/RX-TX switching time.

For example, FIG. 1b is a timing diagram illustrating feedback retransmission based on a HARQ for a TB according to an exemplary embodiment. As shown in FIG. 1b, if a value of a+b is set to 4 slots, when a PSSCH resource in the slot 1 is used as an initial transmission resource for the TB1 and the feedback retransmission based on the HARQ is used, a time interval between the selected first retransmission resource and the initial transmission resource in the slot 1 needs to be greater than or equal to 4 slots. Thus, the nearest retransmission resource should be a PSSCH resource in a slot 6.

It should be understood that, based on the above example, if the TB1 is transmitted on the PSSCH resource in the slot 1 and the feedback retransmission based on the HARQ is used, the nearest retransmission resource should be the PSSCH resource in the slot 6.

However, in the related art, multi-consecutive slots transmission (MCST) is used for data transmission in an SL unlicensed frequency band. Taking consecutive transmission of M TBs as an example (M is an integer greater than or equal to 1): the M consecutive TBs may be repeated consecutive transmissions of the same TB. When supporting consecutive transmission of the same M TBs while also supporting the feedback retransmission based on the HARQ for the TB, if resources selected for one TB are consecutive resources, it is impossible to ensure that the minimum time interval a+b is satisfied between any two resources selected for each TB.

Thus, in the MCST technology, it is impossible to support feedback retransmission based on the HARQ during the repeated consecutive transmissions of the same TB.

In this case, embodiments of the invention provide a method for communication to achieve the feedback retransmission based on the HARQ of the same TB in an MCST scenario.

FIG. 2 is a flow chart illustrating a method for interaction communication between terminals according to an exemplary embodiment. As shown in FIG. 2, embodiments of the invention relates to a method for communication, used in a communication system. The method includes the following steps S1001 to S1005.

At S1001, a terminal 11 performs MCST of a same TB.

In some embodiments, the TB is transmitted on a PSSCH.

In some embodiments, the MCST includes MCST of the same TB in M slots.

For example, the terminal 11 locally performs MCST of the TB1 in 3 consecutive slots based on preconfigured information or an indication signaling.

At S1002, the terminal 11 selects a target PSSCH resource.

In some embodiments, selecting by the terminal 11 the target PSSCH resource includes: selecting by the terminal 11, for the TB, a PSSCH resource for i-th MCST, where i is a positive integer greater than or equal to 1.

In some embodiments, the PSSCH resource includes: a slot resource in the PSSCH.

In some embodiments, the PSSCH resource for the i-th MCST includes PSSCH resource(s) in M consecutive slots, and M is a positive integer greater than 1.

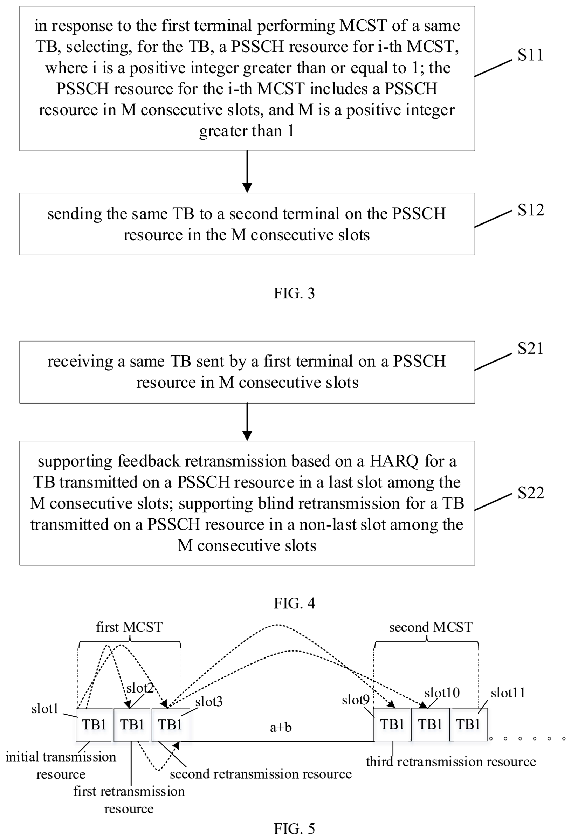

For example, FIG. 5 is a timing diagram illustrating a method for communication according to an exemplary embodiment. As shown in FIG. 5, in the PSSCH, transmission of the TB1 is performed in 3 consecutive slots (i.e., M equals 3). Taking the first MCST as an example (i.e., i equals 1), corresponding PSSCH slot resources are slot 1, slot 2, and slot 3, in which the slot 1 is an initial transmission resource, the slot 2 is a first retransmission resource, and the slot 3 is a second retransmission resource.

For example, continuing with the example shown in FIG. 5. Taking the second MCST (i.e., i equals 2) as an example, the corresponding PSSCH slot resources are slot 9, slot 10, and slot 11, in which the slot 9 is the third retransmission resource.

In some embodiments, feedback retransmission based on a HARQ is supported for the TB transmitted on a PSSCH resource in a last slot among the M consecutive slots for the i-th MCST.

For example, continuing with the example shown in FIG. 5, taking the first MCST (i.e., i equals 1) as an example, for the TB1, the feedback retransmission based on the HARQ is required for the TB transmitted in the slot 3.

In some embodiments, supporting the feedback retransmission based on the HARQ includes: a second-stage sidelink control information (SCI) indicator being in an enabled state.

For example, the feedback retransmission based on the HARQ includes: an HARQ feedback indicator carried in the second-stage SCI being "enable".

In some embodiments, blind retransmission is supported for a TB transmitted on a PSSCH resource in a non-last slot among the M consecutive slots for the i-th MCST.

For example, continuing with the example shown in FIG. 5, taking the first MCST as an example, for the TB1 transmitted in the first slot and the second slot among every 3 slots, a blind retransmission is used. That is, an initial transmission resource selected for the TB1 is in the slot 1, and a time interval between the first retransmission resource selected for the TB1 and the initial transmission resource does not need to satisfy a minimum time requirement based on HARQ feedback (i.e., a time interval between the initial transmission resource and the first retransmission resource may be less than the value of "a+b"). Thus, the first retransmission resource selected for the TB1 is in an adjacent slot to the initial transmission resource, i.e., slot 2. A time interval between the first retransmission resource and the second retransmission resource selected for the TB1 also does not need to satisfy the minimum time interval requirement. Thus, the second retransmission resource selected for the TB1 is in an adjacent slot to the first retransmission resource, i.e., slot 3.

In some embodiments, supporting the blind retransmission includes: an HARQ indicator included in the second-stage SCI being in a disabled state.

For example, the HARQ feedback indicator carried in the second-stage SCI is "disable".

In some embodiments, sending by the terminal 11 the same TB to a terminal 12 includes: sending the same TB to the terminal 12 on the PSSCH resource in the M consecutive slots.

For example, continuing with the example shown in FIG. 5, taking M equals 3 as an example, the terminal 11 sends the TB1 to the terminal 12 on the PSSCH resource in 3 slots, i.e., sends the TB1 to the terminal 12 in slot 1, slot 2, and slot 3.

In some embodiments, before the terminal 11 performs the (i+1)-th MCST, the method further includes: selecting, for the TB, a PSSCH resource for the (i+1)-th MCST, in which the PSSCH resource for the (i+1)-th MCST includes the PSSCH resource in the M consecutive slots.

For example, continuing with the example shown in FIG. 5, taking the first MCST as an example (i.e., i equals 1), the terminal 11 performs the first MCST of the TB1. The PSSCH resource corresponding to the first MCST process includes the PSSCH resource in 3 consecutive slots (i.e., M equals 3). It may be understood that before performing the second MCST (i.e., i+1 equals 2), the corresponding PSSCH resource for the second MCST needs to be selected. Further, for the PSSCH resource corresponding to the second MCST, a number of slot resources needs to be consistent with that corresponding to the PSSCH resource in the first MCST process, i.e., the PSSCH resource for the second MCST includes the PSSCH resource in 3 consecutive slots.

In some embodiments, a slot interval between a first PSSCH resource and a second PSSCH resource satisfies a minimum time interval of the feedback retransmission based on the HARQ.

In some embodiments, the first PSSCH resource is the PSSCH resource for the i-th MCST in the last slot among the M consecutive slots.

In some embodiments, the second PSSCH resource is a PSSCH resource for the (i+1)-th MCST in a first slot among the M consecutive slots.

For example, continuing with the example shown in FIG. 5, for convenience of description, taking i equals 1 as an example, i.e., for the first MCST and the second MCST, the PSSCH resource for the first MCST in the last slot among the 3 consecutive slots is referred to as the first PSSCH resource, i.e., slot 3; the PSSCH resource for the second MCST in the first slot among the 3 consecutive slots is referred to as the second PSSCH resource, i.e., slot 9.

It should be understood that, based on the above explanation, the feedback retransmission based on the HARQ needs to be supported for the TB1 in the slot 3. Thus, for the second MCST, the PSSCH resource in the first slot (i.e., the first in the time sequence) among the M consecutive slots and the slot 3 should satisfy the minimum time interval of the feedback retransmission based on the HARQ, i.e., the time interval corresponding to "a+b". If the value of "a+b" is set to 5, the interval between the first PSSCH resource and the second PSSCH resource should be greater than or equal to 5 slots, i.e., the minimum second resource may be selected at slot 9.

At S1003, the same TB is sent.

In some embodiments, the terminal 11 sends the same TB to the terminal 12.

In some embodiments, the terminal 11 sends the PSSCH to the terminal 12.

In some embodiments, the terminal 11 sends the same TB to the terminal 12 on the PSSCH resource in the M consecutive slots.

For example, continuing with the example shown in FIG. 5, taking the first MCST as an example, the terminal 11 sends the PSSCH resource in 3 consecutive slots, i.e., slot 1, slot 2, and slot 3.

At S1004, the terminal 12 receives the same TB.

In some embodiments, the terminal 12 receives the same TB from the terminal 11.

In some embodiments, the terminal 12 receives the same TB sent by the terminal 11 on the PSSCH resource in M consecutive slots.

For example, continuing with the example shown in FIG. 5, the terminal 12 receives the TB1 sent by the terminal in the slot 1, the slot 2, and the slot 3.

At S1005, the terminal 12 feeds back HARQ information to the terminal 11.

In some embodiments, feedback retransmission based on the HARQ is supported for a TB transmitted on a PSSCH resource in a last slot among the M consecutive slots .

In some embodiments, an HARQ feedback indicator carried in the second-stage SCI for the PSSCH resource in the last slot among the M consecutive slots is "enable".

For example, continuing with the example shown in FIG. 5, the terminal 12 performs the feedback retransmission based on the HARQ in the last slot among the 3 consecutive slots, i.e., slot 3.

For example, the HARQ feedback indicator carried in the second-stage SCI for the PSSCH resource in the slot 3 is "enable".

In some embodiments, blind retransmission is supported for a TB transmitted on a PSSCH resource in a non-last slot among the M consecutive slots.

In some embodiments, an HARQ feedback indicator carried in the second-stage SCI for the PSSCH resource in a non-last slot among the M consecutive slots is "disable".

For example, continuing with the example shown in FIG. 5, the PSSCH resources in non-last slots among the 3 consecutive slots for the terminal 12 are the PSSCH resource corresponding to the slot 1 and the PSSCH resource corresponding to the slot 2. The blind retransmission is supported for the TB transmitted on the PSSCH resource in the non-last slot among the M consecutive slots, i.e., the blind retransmission is performed on both the PSSCH resource corresponding to the slot 1 and the PSSCH resource corresponding to the slot 2.

For example, the HARQ feedback indicator carried in the second-stage SCI for the PSSCH transmitted in the slot 1 and the PSSCH transmitted in the slot 2 is "disable".

In some embodiments, HARQ information corresponding to the TB is fed back on a PSFCH occasion, in which the PSFCH occasion is mapped to the PSSCH resource in the last slot among the M consecutive slots.

For example, continuing with the example shown in FIG. 5, the HARQ information corresponding to the TB is fed back on the PSFCH occasion, in which the PSFCH occasion is mapped to the PSSCH resource in slot 3.

The method for communication involved in the embodiments of the invention may include at least one of the steps S1001 to S1005. For example, the step S1002 may be implemented as an independent embodiment, the step S1004 may be implemented as an independent embodiment, a combination of the steps S1002 and S1003 may be implemented as an independent embodiment, a combination of the steps S1002, S1003, S1004, and S1005 may be implemented as an independent embodiment, but it is not limited here. In some embodiments, the steps S1001, S1002, and S1003 may be exchanged in order or executed simultaneously; the steps S1004 and S1005 may be exchanged in order or executed simultaneously. In some embodiments, the steps S1001 and S1003 are optional, and one or more of these steps may be omitted or substituted in different embodiments.

FIG. 3 is a flow chart illustrating a method for interaction communication between terminals according to an exemplary embodiment. As shown in FIG. 3, embodiments of the invention relates to a method for communication. The method is performed by a first terminal, including the following steps S11 to S12.

At step S11, in response to the first terminal performing MCST of a same TB, a PSSCH resource for i-th MCST is selected for the TB, where i is a positive integer greater than or equal to 1; the PSSCH resource for the i-th MCST includes a PSSCH resource in M consecutive slots, and M is a positive integer greater than 1.

In the embodiment of the invention, the first terminal performs transmission of the same TB via a PSSCH.

In the embodiment of the invention, the MCST includes MCST of the same TB in M slots.

For example, as shown in FIG. 5, the first terminal performs the MCST of the TB1 in 3 consecutive slots (i.e., M equals 3). Taking the first MCST (i.e., i equals 1) as an example, the PSSCH resources used by the first terminal for the MCST of the TB1 in 3 consecutive slots are: slot 1, slot 2, and slot 3.

In the embodiment of the invention, feedback retransmission based on a HARQ is supported for a TB transmitted on a PSSCH resource for the i-th MCST in a last slot among the M consecutive slots.

For example, continuing with the example shown in FIG. 5, taking the first MCST as an example, the feedback retransmission based on the HARQ is supported for the TB1 transmitted by the first terminal for the first MCST in a last slot (i.e., slot 3) among the 3 consecutive slots.

In some embodiments, supporting the feedback retransmission based on the HARQ includes: a second-stage SCI indicator being in an enabled state.

For example, the feedback retransmission based on the HARQ includes: an HARQ feedback indicator carried in the second-stage SCI being "enable".

In the embodiment of the invention, a PSSCH resource for the (i+1)-th MCST is selected for the TB, in which the PSSCH resource for the (i+1)-th MCST includes the PSSCH resource in the M consecutive slots.

For example, continuing with the example shown in FIG. 5, taking the first MCST

(i.e., i equals 1) as an example, the (i+1)-th MCST is the second MCST. Since the TB1 is transmitted for the first MCST in 3 consecutive slots, correspondingly, the TB1 is also transmitted for the second MCST in 3 consecutive slots.

In the embodiment of the invention, a slot interval between a first PSSCH resource and a second PSSCH resource satisfies a minimum time interval of the feedback retransmission based on the HARQ; the first PSSCH resource is the PSSCH resource for the i-th MCST in the last slot among the M consecutive slots; the second PSSCH resource is a PSSCH resource for the (i+1)-th MCST in a first slot among the M consecutive slots.

For example, continuing with the example shown in FIG. 5, for convenience of description, taking i equals 1 as an example, i.e., for the first MCST and the second MCST, the PSSCH resource for the first MCST in the last slot among the 3 consecutive slots is referred to as the first PSSCH resource, i.e., slot 3; the PSSCH resource for the second MCST in the first slot among the 3 consecutive slots is referred to as the second PSSCH resource, i.e., slot 9.

It should be understood that, based on the above explanation, the feedback retransmission based on the HARQ needs to be supported for the TB1 in the slot 3. Thus, for the second MCST, the PSSCH resource in the first slot (i.e., the first in the time sequence) and the slot 3 should satisfy the minimum time interval of the feedback retransmission based on the HARQ, i.e., the time interval corresponding to "a+b". If the value of "a+b" is set to 5, the interval between the first PSSCH resource and the second PSSCH resource should be greater than or equal to 5 slots, i.e., the minimum second resource may be selected at slot 9.

In some embodiments, blind retransmission is supported for a TB transmitted on a PSSCH resource in a non-last slot among the M consecutive slots.

For example, continuing with the example shown in FIG. 5, taking the first MCST as an example, for the TB1 transmitted on the first slot and the second slot among every 3 slots, a blind retransmission is used. That is, an initial transmission resource selected for the TB1 is in the slot 1, and a time interval between the first retransmission resource selected for the TB1 and the initial transmission resource does not need to satisfy a minimum time requirement based on HARQ feedback (i.e., a time interval between the initial transmission resource and the first retransmission resource may be less than the value of "a+b"). Thus, the first retransmission resource selected for the TB1 is in an adjacent slot to the initial transmission resource, i.e., slot 2. A time interval between the first retransmission resource and the second retransmission resource selected for the TB1 also does not need to satisfy the minimum time interval requirement. Thus, the second retransmission resource selected for the TB1 is in an adjacent slot to the first retransmission resource, i.e., slot 3.

In some embodiments, supporting the blind retransmission includes: an HARQ indicator included in the second-stage SCI being in a disabled state.

For example, the HARQ feedback indicator carried in the second-stage SCI is "disable".

At S12, the same TB is sent to a second terminal on the PSSCH resource in the M consecutive slots.

For example, continuing with the example shown in FIG. 5, the first terminal sends the TB1 to the second terminal on the PSSCH resource in 3 consecutive slots (slot 1, slot 2, and slot 3).

Based on the above embodiments, the terminal performs the HARQ feedback retransmission on the corresponding PSSCH resource for the current MCST in the last slot, and when selecting the retransmission resource corresponding to the next MCST, sets the interval between the PSSCH resource for the next MCST in the first slot and the corresponding PSSCH resource for the current MCST in the last slot to be greater than the minimum time interval required for the HARQ feedback retransmission. Thus, the terminal may implement the method for communication based on the feedback retransmission based on the HARQ in an MCST scenario.

Based on the same concept, the embodiments of the invention further provide a method for communication, performed by a second terminal.

FIG. 4 is a flow chart illustrating a method for interaction communication between terminals according to an exemplary embodiment. As shown in FIG. 4, the method includes the following steps S21 to S22.

At 21, a same TB sent by a first terminal on a PSSCH resource in M consecutive slots is received.

At 22, feedback retransmission based on a HARQ is supported for a TB transmitted on a PSSCH resource in a last slot among the M consecutive slots; blind retransmission is supported for a TB transmitted on a PSSCH resource in a non-last slot among the M consecutive slots .

The method for communication involved in the embodiments of the invention is consistent with the content related to the execution process of the method for communication performed by the first terminal in the above embodiments, which will not be repeated here again.

It should be noted that, those skilled in the art may understand that various implementations/embodiments involved in the above embodiments of the invention may be used in combination with the embodiments described above or may be used independently. The principle of implementation is similar whether used independently or in combination with the embodiments described above. In the invention, some of the embodiments are illustrated as implementations used together. Those skilled in the art may understand that such an illustrative description is not a limitation of the embodiments of the invention.

Based on the same concept, embodiments of the invention also provides an apparatus for communication.

It may be understood that the apparatus for communication provided in the embodiments of the invention includes, in order to realize the above-described functions, a hardware structure and/or a software module corresponding to the implementation of each function. In combination with the units and algorithmic steps of the various examples disclosed in the embodiments of the invention, the embodiments of the invention are capable of being implemented in the form of the hardware or a combination of the hardware and a computer software. Whether a particular function is performed in the form of the hardware or in the form of computer software driving the hardware depends on a particular application and design constraints of a technical solution. Those skilled in the art may use different ways to implement the described functions for each particular application, but such implementations should not be considered outside the scope of the technical solutions of the embodiments of the invention.

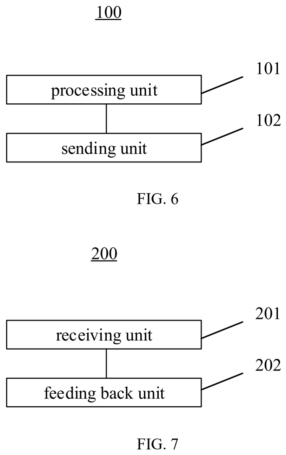

FIG. 6 is a block diagram illustrating an apparatus for communication according to an exemplary embodiment. The apparatus 100 may be a terminal or a component within a terminal.

As shown in FIG. 6, the apparatus 100 may include a processing unit 101 and a sending unit 102.

The processing unit 101 is configured to, in response to the first terminal performing MCST of a same TB, select, for the TB, a PSSCH resource for i-th MCST, where i is a positive integer greater than or equal to 1; the PSSCH resource for the i-th MCST includes a PSSCH resource in M consecutive slots, and M is a positive integer greater than 1.

The sending unit 102 is configured to send the same TB to a second terminal on the PSSCH resource in the M consecutive slots.

In an implementation, feedback retransmission based on a HARQ is supported for a TB transmitted on a PSSCH resource for the i-th MCST in a last slot among the M consecutive slots.

In an implementation, the processing unit 101 is further configured to: select, for the TB, a PSSCH resource for the (i+1)-th MCST, in which the PSSCH resource for the (i+1)-th MCST includes the PSSCH resource in the M consecutive slots; in which a slot interval between a first PSSCH resource and a second PSSCH resource satisfies a minimum time interval of the feedback retransmission based on the HARQ; the first PSSCH resource is the PSSCH resource for the i-th MCST in the last slot among the M consecutive slots; and the second PSSCH resource is a PSSCH resource for the (i+1)-th MCST in a first slot among the M consecutive slots.

In an implementation, blind retransmission is supported for a TB transmitted on a PSSCH resource in a non-last slot among the M consecutive slots .

In an implementation, supporting the feedback retransmission based on the HARQ includes: an HARQ indicator included in second-stage SCI being in an enabled state.

In an implementation, supporting the blind retransmission includes: an HARQ indicator included in second-stage SCI being in a disabled state.

Based on the same concept, embodiments of the invention also provides an apparatus for communication. The apparatus may be a terminal or a component within a terminal.

FIG. 7 is a block diagram illustrating an apparatus for communication according to an exemplary embodiment. As shown in FIG. 7, the apparatus 200 may include a receiving unit 201 and a feeding back unit 202.

The receiving unit 201 is configured to receive a same TB sent by a first terminal on a PSSCH resource in M consecutive slots; in which feedback retransmission based on a HARQ is supported for a TB transmitted on a PSSCH resource in a last slot among the M consecutive slots; blind retransmission is supported for a TB transmitted on a PSSCH resource in a non-last slot among the M consecutive slots.

The feeding back unit 202 is configured to feed back HARQ information corresponding to the TB on a PSFCH occasion, in which the PSFCH occasion is mapped to the PSSCH resource in the last slot among the M consecutive slots.

Regarding the apparatus in the above embodiments, the specific manner in which each module performs operations has been described in detail in the embodiments related to the method, and will not be described in detail here.

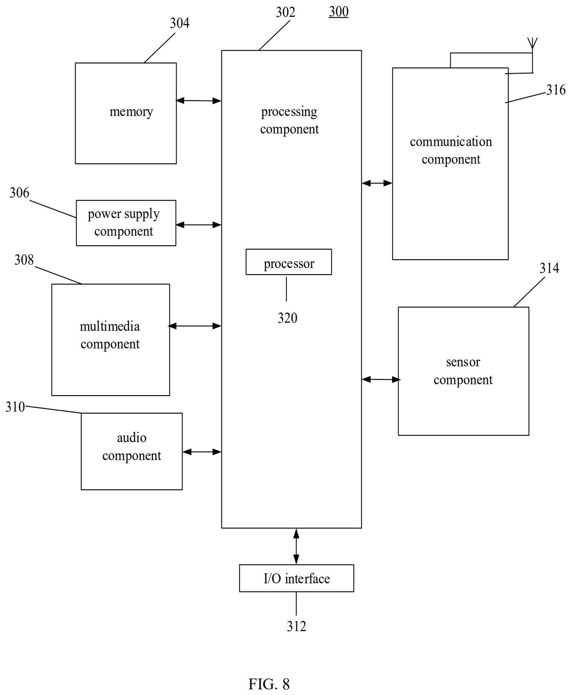

FIG. 8 is a block diagram illustrating a communication device 300 according to an exemplary embodiment. For example, the device 300 may be any terminal such as a cell phone, a computer, a digital broadcasting terminal, a message transceiver device, a gaming console, a tablet device, a medical device, a fitness device, a personal digital assistant, etc.

Referring to FIG. 8, the device 300 may include one or more of the following components: a processing component 302, a memory 304, a power supply component 306, a multimedia component 308, an audio component 310, an inputs/outputs (I/O) interface 312, a sensor component 314, and a communication component 316.

The processing component 302 generally controls the overall operation of the device 300, such as operations associated with displays, telephone calls, data communications, camera operations, and recording operations. The processing component 302 may include one or more processors 320 to execute instructions to accomplish all or some of the steps of the method described above. In addition, the processing component 302 may include one or more modules to facilitate interaction between the processing component 302 and other components. For example, the processing component 302 may include a multimedia module to facilitate interaction between the multimedia component 308 and the processing component 302.

The memory 304 is configured to store various types of data to support operation at the device 300. Examples of such data include instructions for any application or method operated on the device 300, contact data, phone book data, messages, pictures, videos, etc. The memory 304 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD-ROM.

The power supply component 306 provides power to the various components of the device 300. The power supply component 306 may include a power management system, one or more power supplies, and other components associated with generating, managing, and distributing power for the device 300.

The multimedia component 308 includes a screen providing an output interface between the device 300 and a user. In some embodiments, the screen may include a liquid crystal display (LCD) and a touch panel (TP). In case the screen includes a touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a duration and pressure associated with the touch or swipe action. In some embodiments, the multimedia component 308 includes a front-facing camera and/or a rear-facing camera. The front camera and/or the rear camera may receive external multimedia data when the device 300 is in an operating mode, such as a shooting mode or a video mode. Each of the front camera or the rear camera may be a fixed optical lens system or have a focal length and an optical zoom capability.

The audio component 310 is configured to output and/or input audio signals. For example, the audio component 310 includes a microphone (MIC) that is configured to receive external audio signals when the device 300 is in an operational mode, such as a call mode, a recording mode, and a voice recognition mode. The received audio signals may be further stored in the memory 304 or transmitted via the communication component 316. In some embodiments, the audio component 310 further includes a speaker for outputting audio signals.

The I/O interface 312 provides an interface between the processing component 302 and a peripheral interface module, the peripheral interface module may be a keypad, a click wheel, buttons, etc. The buttons may include, but are not limited to: a home button, a volume button, a start button, and a lock button.

The sensor component 314 includes one or more sensors for providing various aspects of status assessments for the device 300. For example, the sensor component 314 may detect an open/closed state of the device 300, the relative positioning of components, such as the components being the display and keypad of the device 300, the sensor component 314 may also detect a change in the position of the device 300 or one component of the device 300, the presence or absence of user contact with the device 300, the orientation of the device 300 or acceleration/deceleration of the device 300, and the temperature change of the device 300. The sensor component 314 may include a proximity sensor configured to detect the presence of a nearby object in the absence of any physical contact. The sensor component 314 may also include an optical sensor, such as a CMOS or CCD image sensor, for use in imaging applications. In some embodiments, the sensor component 314 may also include an acceleration sensor, a gyroscope sensor, a magnetic sensor, a pressure sensor, or a temperature sensor.

The communication component 316 is configured to facilitate communication between the device 300 and other devices by wired or wireless means. The device 300 may access a wireless network based on a communication standard, such as Wi-Fi, 2G or 3G, or their combination. In an exemplary embodiment, the communication component 316 receives broadcast signals or broadcast-related information from an external broadcast management system in a broadcast channel. In an exemplary embodiment, the communication component 316 further includes a near field communication (NFC) module to facilitate short-range communication. For example, in the NFC module may be implemented based on radio frequency identification (RFID) technology, infrared data association (IrDA) technology, ultra wide band (UWB) technology, Bluetooth (BT) technology, and other technologies.

In exemplary embodiments, the device 300 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In an exemplary embodiment, the invention also provides a non-transitory computer-readable storage medium including instructions, such as the memory 304 described above. The instructions may be executed by a processor 320 of the device 300 to complete the method for communication. For example, the non-transitory computer-readable storage medium may be a ROM, a RAM, a CD-ROM, a magnetic tape, a floppy disk, an optical data storage device, etc.

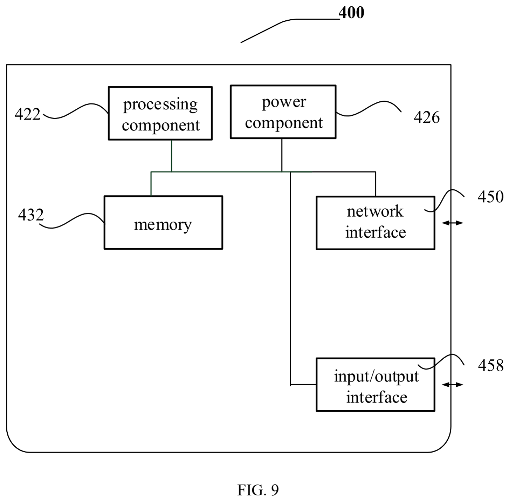

FIG. 9 is a block diagram illustrating a communication device 400 according to an exemplary embodiment. For example, the device 400 may be provided as a network device. Referring to FIG. 9, the communication device 400 includes a processing component 422, which further includes one or more processors, and a memory resource represented by a memory 432 for storing instructions that may be executed by the processing component 422, such as an application program. The application program stored in memory 432 may include one or more modules each corresponding to a set of instructions. In addition, the processing component 422 is configured to execute the instructions to perform the method described above.

The communication device 400 may also include a power component 426 configured to perform power management of the communication device 400, a wired or wireless network interface 450 configured to connect the communication device 400 to a network, and an I/O interface 458. The communication device 400 may operate an operating system based on the operating system stored in the memory 432, such as Windows Server TM, Mac OS XTM, UnixTM, LinuxTM, FreeBSDTM, or the like.

In an exemplary embodiment, a non-transitory computer-readable storage medium including instructions may be provided, such as the memory 432 including the instructions. The instructions may be executed by the processor 422 of the device 400 to complete the method for communication. For example, the non-transitory computer-readable storage medium may be a read-only memory (ROM), a random access memory (RAM), a compact disc read-only memory (CD-ROM), a magnetic tape, a floppy disk, an optical data storage device, etc.

It may be understood that "a plurality of" in the invention refers to two or more, and other quantifiers are similar. The term "and/or" may describe association relationships of associated objects, indicating that there may be three types of relationships, for example, A and/or B, which may mean that, A exists alone, A and B exist at the same time, or B exists alone. The character "/" generally indicates that the associated objects before and after the character "/" are in an "or" relationship. The singular forms "a/an", "said" and "the" are also intended to include the plural forms unless the context clearly dictates otherwise.

It may be further understood that in the invention, the meaning of the terms "in response to" and "if" depends on the context and the actual scenarios in which they are used. As used here, the term "in response to" may be interpreted as "in the case that/ in the case of "or "when" or "if".

It may be further understood that the terms "first", "second", etc., are used to describe various types of information, but such information should not be limited to these terms. These terms are only configured to distinguish the same type of information from one another and do not indicate a particular order or level of importance. Indeed, the expressions "first", "second", etc. may be used completely interchangeably. For example, without departing from the scope of the embodiments of the invention, first information may also be called second information, and similarly, second information may also be called first information.

It may be further understood that although operations are described in a specific order in the figures according to the embodiments of the invention, it should not be understood as requiring that these operations be performed in the specific order illustrated or in a serial order, or that perform all operations illustrated to obtain the desired result. In certain circumstances, multitasking and parallel processing may be advantageous.

Other embodiments of the invention will be apparent to those skilled in the art from consideration of the specification and practice of the invention disclosed here. This application is intended to cover any variations, uses, or adaptations of the disclosure following the general principles of the disclosure and including common knowledge or conventional technical means in the art that are not disclosed here.

It should be understood that the embodiments of the invention are not limited to the precise structures described above and shown in the drawings, and various modifications and changes may be made without departing from the scope thereof. The scope of embodiments of the disclosure is limited only by the appended claims.

## Claims

1. A method for communication, performed by a first terminal, comprising:
in response to the first terminal performing multi-consecutive slots transmission (MCST) of a same transport block (TB), selecting, for the TB, a physical sidelink shared channel (PSSCH) resource for i-th MCST, where i is a positive integer greater than or equal to 1; the PSSCH resource for the i-th MCST comprises a PSSCH resource in M consecutive slots, and M is a positive integer greater than 1; and
sending the same TB to a second terminal on the PSSCH resource in the M consecutive slots.

2. The method according to claim 1, wherein feedback retransmission based on a hybrid automatic repeat request (HARQ) is supported for a TB transmitted on a PSSCH resource for the i-th MCST in a last slot among the M consecutive slots.

3. The method according to claim 2, further comprising:
selecting, for the TB, a PSSCH resource for the (i+1)-th MCST, wherein the PSSCH resource for the (i+1)-th MCST comprises a PSSCH resource in the M consecutive slots;
wherein a slot interval between a first PSSCH resource and a second PSSCH resource satisfies a minimum time interval of the feedback retransmission based on the HARQ;
the first PSSCH resource is the PSSCH resource for the i-th MCST in the last slot among the M consecutive slots; and
the second PSSCH resource is a PSSCH resource for the (i+1)-th MCST in a first slot among the M consecutive slots.

4. The method according to claim 1, wherein blind retransmission is supported for a TB transmitted on a PSSCH resource in a non-last slot among the M consecutive slots.

5. The method according to claim 2 or 3, wherein supporting the feedback retransmission based on the HARQ comprises:
an HARQ indicator comprised in second-stage sidelink control information (SCI) being in an enabled state.

6. The method according to claim 4, wherein supporting the blind retransmission comprises:
an HARQ indicator comprised in second-stage sidelink control information (SCI) being in a disabled state.

7. A method for communication, performed by a second terminal, comprising:
receiving a same TB sent by a first terminal on a physical sidelink shared channel (PSSCH) resource in M consecutive slots, wherein feedback retransmission based on a hybrid automatic repeat request (HARQ) is supported for a TB transmitted on a PSSCH resource in a last slot among the M consecutive slots; blind retransmission is supported for a TB transmitted on a PSSCH resource in a non-last slot among the M consecutive slots; and
feeding back HARQ information corresponding to the TB on a physical sidelink feedback channel (PSFCH) occasion, wherein the PSFCH occasion is mapped to the PSSCH resource in the last slot among the M consecutive slots.

8. A communication apparatus, comprising:
a processing unit, configured to, in response to the first terminal performing multi-consecutive slots transmission (MCST) of a same transport block (TB), select, for the TB, a physical sidelink shared channel (PSSCH) resource for i-th MCST, where i is a positive integer greater than or equal to 1; the PSSCH resource for the i-th MCST comprises a PSSCH resource in M consecutive slots, and M is a positive integer greater than 1; and
a sending unit, configured to send the same TB to a second terminal on the PSSCH resource in the M consecutive slots.

9. A communication apparatus, comprising:
a receiving unit, configured to receive a same TB sent by a first terminal on a physical sidelink shared channel (PSSCH) resource in M consecutive slots; wherein feedback retransmission based on a hybrid automatic repeat request (HARQ) is supported for a TB transmitted on a PSSCH resource in a last slot among the M consecutive slots; blind retransmission is supported for a TB transmitted on a PSSCH resource in a non-last slot among the M consecutive slots; and
a feeding back unit, configured to feed back HARQ information corresponding to the TB on a physical sidelink feedback channel (PSFCH) occasion, wherein the PSFCH occasion is mapped to the PSSCH resource in the last slot among the M consecutive slots.

10. A communication device, comprising:
one or more processors;
wherein the processors are configured to invoke instructions to cause the communication device to perform the method according to any one of claims 1 to 6 or claim 7.

11. A storage medium storing instructions, wherein when the instructions are executed by a communication device, the communication device is caused to perform the method according to any one of claims 1 to 6 or claim 7.
